**Europäisches Patentamt**

(19) **European Patent Office**

**Office européen des brevets**

(11) Veröffentlichungsnummer: **0 062 917
B1**

(12) **EUROPÄISCHE PATENTSCHRIFT**

(45) Veröffentlichungstag der Patentschrift:
26.02.86

(51) Int. Cl.⁴: **A 01 C 11/02**

(21) Anmeldenummer: **82103091.3**

(22) Anmeldetag: **10.04.82**

(54) **Pflanzmaschine.**

(30) Priorität: **14.04.81 DE 3115006**

(43) Veröffentlichungstag der Anmeldung:
**20.10.82 Patentblatt 82/42**

(45) Bekanntmachung des Hinweises auf die Patenterteilung:
**26.02.86 Patentblatt 86/9**

(84) Benannte Vertragsstaaten:
**BE DE FR GB NL**

(56) Entgegenhaltungen:
**DE - A - 2 309 879
FR - A - 1 567 790
FR - A - 2 432 265
NL - A - 7 202 589
NL - A - 8 004 362**

(73) Patentinhaber: **Heilmann, Reinhold, Riemsloher Strasse 40, D-4520 Melle 1 (DE)**

(72) Erfinder: **Heilmann, Reinhold, Riemsloher Strasse 40, D-4520 Melle 1 (DE)**

(74) Vertreter: **Busse & Busse Patentanwälte,
Postfach 1226 Grosshandelsring 6, D-4500 Osnabrück (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Pflanzmaschine zum maschinellen Einsetzen von in Erdtöpfen herangezogenen Jungpflanzen in eine in das Erdreich gezogene Pflanzrinne nach dem Oberbegriff des Patentanspruchs 1.

Bei einer bekannten Pflanzmaschine für derartige Jungpflanzen (DE-A-2 309 879) fördert ein Förderer die Erdtöpfe bzw. Erd-preßtöpfe oder Topfballen schräg nach unten bis in die unmittelbare Nähe der Pflanzrinne, wo sie von einer Greifvorrichtung abgenommen und in die Pflanzrinne eingesetzt werden. Die Greifvorrichtung besteht dabei aus einander gegenüberliegenden Zangen, die mit ihren Spitzen in den jeweils vordersten Erdtopf eindringen, diesen aus der Längsreihe vereinzeln und in die Pflanzrinne einsetzen. Nach einer abgewandelten Ausführungsform der bekannten Pflanzmaschine, die in den Fällen zum Einsatz kommen soll, in denen das durch die Zangen vorgenommene Ausschieben nicht ausreicht, um die Erdtöpfe sicher einzupflanzen, sind am Abgabeende des Förderers flexible Scheiben mit Klemmgreifern angeordnet, die am Abgabeende des Förderers den jeweils vordersten Erdtopf erfassen und nach dem Einpflanzen wieder loslassen.

Zwar können bei der bekannten Pflanzmaschine die Topfballen bzw. Erdtöpfe unabhängig vom Arbeitstakt der Pflanzmaschine von einer Bedienungsperson nach Willkür auf den Förderer aufgesetzt werden, was dessen Beschickung sehr einfach macht, jedoch hat sich gezeigt, daß ein ordnungsgemäßes Einpflanzen des auf dem Förderer jeweils vordersten Erdtopfes dadurch erschwert oder sogar verhindert wird, daß beim Vereinzeln mittels der Greifvorrichtungen der jeweils nachfolgende Erdtopf teilweise mitgenommen wird. Hierdurch wird dessen Abnahmeposition ungünstig beeinflußt, oder es kann, besonders bei größeren Pflanzen mit höherem Blattwerk, aufgrund einer Verhakung des Blattwerks des vordersten Erdtopfes mit dem des nachfolgenden Erdtopfes der Fall eintreten, daß der nachfolgende Erdtopf mitgerissen wird, wodurch eine Unterbrechung im maschinellen Pflanzvorgang eintritt bzw. Fehlstellen in der Pflanzreihe verbleiben.

Bei einer weiteren bekannten, gattungsbildenden Pflanzmaschine (NL-A-7 202 589), mit der in Erdtöpfen herangezogene Jungpflanzen in das Erdreich maschinell eingesetzt werden können, soll durch den dem Förderer zugeordneten Festhalter zwar erreicht werden, daß während der Wegnahme des jeweils vordersten Erdtopfes mittels der Wegnahmevorrichtung der jeweils nachfolgende Erdtopf auf dem Förderer festgelegt wird, um auf diese Weise Störungen im maschinellen Pflanzvorgang zu verhindern, jedoch lassen sich diese im Betrieb der Pflanzmaschine dennoch nicht unter den auftretenden Arbeitsbedingungen immer vermeiden. Dies ist dadurch bedingt, daß bei der bekannten Pflanzmaschine der Förderer kontinuierlich mit hoher Geschwindigkeit umläuft und die Wegnahmevorrichtung von einem um eine Hochachse hin und herschwenkbaren Pflanzfinger gebildet ist, der bei seiner Vorbeibewegung am Abgabeende des Förderers jeweils einen Erdtopf erfaßt, damit dieser in das Erdreich eingesetzt wird. Hierbei kann es geschehen, daß der jeweils nachfolgende Erdtopf aufgrund voraufgegangener Beschädigungen oder kleinerer als normaler Abmessungen infolge des ständig umlaufenden Förderers mit seinem vorauslaufenden Ende im unmittelbaren Anschluß an den vordersten Erdtopf ebenfalls auf die Wegnahmevorrichtung und damit in die Bewegungsbahn des hin- und hergehenden Pflanzfingers geschoben wird. Dies bedeutet, daß der Pflanzfinger bei seiner Hin- oder Herbewegung nicht nur den vordersten, einzupflanzenden Erdtopf, sondern auch den bereichsweise in seine Bewegungsbahn hineinreichenden nachfolgenden Erdtopf erfaßt und dessen vorstehendes Stück zerschlägt. Auf diese Weise entstehen Störungen im Pflanzvorgang.

Es ist zwar auch schon eine Pflanzmaschine bekannt geworden (GB-A-2 059 233), bei der zum Vereinzeln von in einer Reihe herangeführten Erdtöpfen Greiforgane vorgesehen sind, jedoch werden bei dieser Pflanzmaschine nicht einzelne Erdtöpfe in unmittelbarer Aufeinanderfolge auf einem Förderer transportiert, sondern die einzelnen Erdtöpfe sind durch eine Banderole miteinander verbunden, wobei die Greiforgane einander gegenüberliegend in Bereichen zwischen den Erdtöpfen an der Banderole angreifen und die Vereinzelung des jeweils vordersten Erdtopfes mit Hilfe einer eine Klemmvorrichtung umfassenden Trennvorrichtung erfolgt, die die Banderole zwischen dem vordersten und dem nachfolgenden Erdtopf durchtrennt. Hierdurch ist zwar erreicht, daß jeweils nur der vorderste Erdtopf abgetrennt und einer Einpflanzvorrichtung zugeführt wird, jedoch ist der konstruktive Aufwand hierfür sehr hoch und die Erdtöpfe besitzen eine raum- und materialaufwendige Sonderausführung durch die zu ihrer Verbindung unter Einhaltung eines gegenseitigen Abstands vorgesehenen Banderolierbänder. Dessenungeachtet können auch bei dieser bekannten Pflanzmaschine Betriebsstörungen dadurch auftreten, daß der jeweils vereinzelte Erdtopf in eine an einem Pflanzrad umlaufende Tasche in senkrechtem Fall abgegeben und durch Auseinanderbewegen des von spreizbaren Backen gebildeten Taschenbodens wiederum in freiem Fall auf dem Erdreich abgesetzt wird. Hierbei besteht insbesondere bei solchen Erdtöpfen, deren Pflanzen bereits ein größeres Blattwerk aufweisen, die Gefahr, daß die Töpfe beim Aufsetzen auf das Erdreich umfallen oder bei größeren Blattmassen zwischen den Speizbacken der Taschen des Pflanzrades hängen bleiben.

Der Erfindung liegt die Aufgabe zugrunde, eine Pflanzmaschine gemäß dem Gattungsbegriff des Anspruchs 1 zu schaffen, bei der unter Erhalt einer vom Arbeitstakt der Maschine unabhängigen Beschickung des Förderers mit den Erdtöpfen mit einfachen Mitteln eine sichere Vereinzelung und Abnahme des jeweils vordersten Erdtopfes auf dem Förderer ohne nachteilige Einwirkungen auf den jeweils nächstfolgenden Erdtopf gewährleistet und der jeweils vereinzelte Erdtopf sicher und störungsfrei in das Erdreich einsetzbar ist.

Diese Aufgabe wird nach der Erfindung durch eine Ausgestaltung der Pflanzmaschine gelöst, wie sie im Anspruch 1 gekennzeichnet ist. Der Festhalter, der in den Stillstandsphasen des Förderers den sich an den vordersten Erdtopf jeweils anschlie-ßenden nächstfolgenden Erdtopf auf dem Förderer festlegt, wirkt bei dieser Ausgestaltung zur Vereinzelung des vordersten Erdtopfes mit dem in einer vertikalen Ebene aufwärts- und abwärtsbewegbaren Pflanzarm bzw. dem an dessen Ende angeordneten Greiforgan zusammen, wodurch eine zwangläufige Abnahme des vordersten Erdtopfes erfolgt, ohne daß die Abnahmebewegung auf den nächstfolgenden Erdtopf übertragen und dieser in seiner Position verändert wird oder aufgrund von Verhakungen seines Blattwerkes mit dem Blattwerk der Pflanze des vordersten Erdtopfes mitgenommen wird und u.U. umstürzt. Zugleich erfolgt durch die gesteuerte Auf- und Abwärtsbewegung des Pflanzarms auch ein sicheres Einsetzen des vereinzelten Erdtopfes in die in das Erdreich gezogene Pflanzrinne, indem das Greiforgan im unteren Endbereich der Bewegungsbahn des Pflanzarms zwangläufig geöffnet und der Erdtopf freigegeben wird.

Weitere, vorteilhafte Ausgestaltungen der Erfindung ergeben sich aus den Unteransprüchen. In der nachstehenden Beschreibung ist in Verbindung mit der Zeichnung ein Ausführungsbeispiel des Gegenstands der Erfindung näher erläutert. In der Zeichnung zeigen:

Fig. 1 eine Seitenansicht der erfindungsgemäßen Pflanzmaschine und

Fig. 2 einen vergößerten Ausschnitt der Pflanzmaschine nach Fig. 1 in perspektivischer Darstellung.

Die in der Zeichnung dargestellte Pflanzmäschine umfaßt ein als Ganzes mit 1 bezeichnetes Maschinengestell, an dessen vorderem Ende ein Pflanzschar 2 befestigt ist, welches eine Pflanzrinne in das Erdreich zieht. Ferner ist das Maschinengestell 1 mit einem Träger 3 versehen, an dessen freiem Ende zwei Druckscheiben oder -rollen 4 angebracht sind, die in an sich bekannter Weise die Erde beidseits der gezogenen Pflanzrinne zur Festlegung von mittels der Maschine eingesetzten Erdtöpfen 5 andrücken und dabei gleichzeitig die fahrbare Abstützung der Maschine bilden, die im übrigen mittels einer Anhängevorrichtung 6 an die Rückseite eines Schleppers od. dgl. Zugfahrzeugs kuppelbar ist.

Mittels eines im Maschinengestell 1 für eine Umlaufbewegung abgestützten, intermittierend antreibbaren Förderers 7 erfolgt eine schrittweise Zufuhr der Erdtöpfe 5 in einer Längsreihe zu einer Greifvorrichtung 8, mittels welcher der in Förderrichtung jeweils vorderste Erdtopf 5 vom Förderer 7 in dessen Stillstandsphasen abgenommen und in die mittels des Pflanzschars 2 gezogene Pflanzrinne eingesetzt wird.

Der Förderer 7 ist von einem Förderband 9 gebildet, das um eine vordere Umlenkrolle 10 und eine hintere Umlenkrolle 11 umläuft. Sein Fördertrum 12 verläuft dabei im wesentlichen waagerecht zur Greifvorrichtung 8 hin, bei dem dargestellten Beispiel mit einer geringen Neigung von etwa 10°. Der Förderer 7 wie auch die Greifvorrichtung 8 erhalten ihren Antrieb in nicht näher dargestellter Weise von der Zugmaschine her, wobei der intermittierende Antrieb des Förderbandes 9 in an sich bekannter Weise über ein geeignetes Gesperre bzw. Rastgetriebe 13 herbeigeführt wird.

Der Förderer 7 umfaßt zwei einander gegenüberliegende Seitenwände 14 und 15 für eine Führung der auf seinem Fördertrum 12 vorbewegten Erdtöpfe 5. Die Seitenwand 14 ist fest am Maschinengestell 1 angebracht, während die Seitenwand 15 zur Förderrichtung des Förderers 7 querbeweglich ist, indem sie lediglich an ihrem von der Greifvorrichtung 8 abgewandten Ende am Maschinengestell 1 durch Befestigungsmittel 16, z.B. Schrauben oder Niete, befestigt ist und von dieser Befestigungsstelle aus zum vorderen Ende des Förderers 7 hin frei auskragt.

Der querbeweglichen Seitenwand 15 des Förderers 7 ist ein Festhalter 17 zugeordnet, der in den Stillstandsphasen des Förderers 7 und während der Abnahme des jeweils vordersten Erdtopfes 5' mittels der Greifvorrichtung 8 den jeweils nächstfolgenden Erdtopf 5 auf dem Förderer 7 festlegt, diesen jedoch während der Vorschubphasen des Förderers 7 für eine Vorbewegung in die Abnahmestellung freigibt.

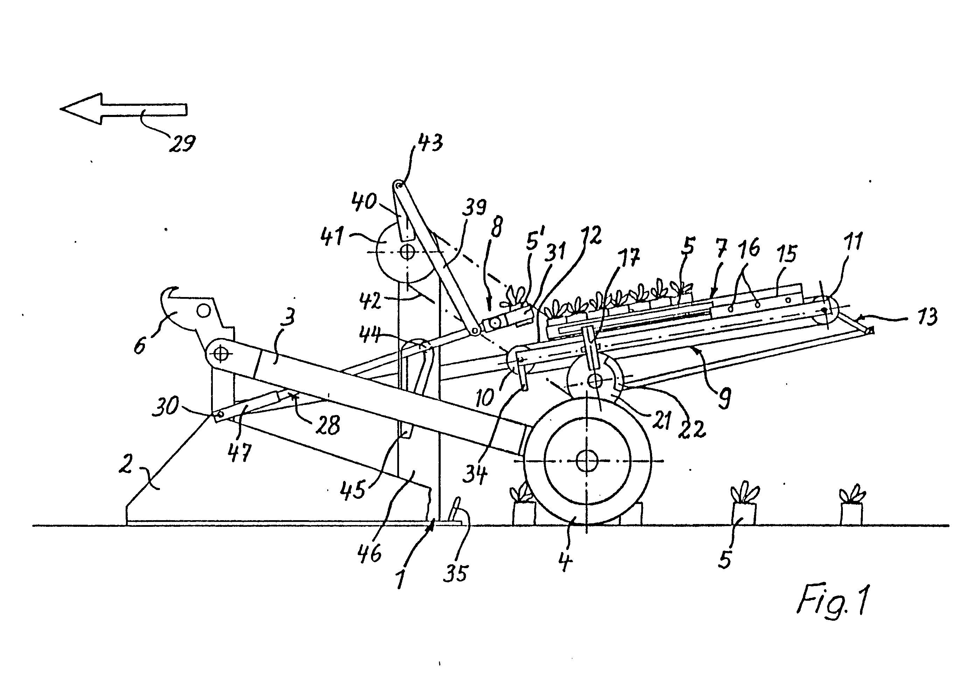

Der Festhalter 17 ist dabei im einzelnen von einem entsprechend dem Vorschubtakt des Förderers 7 in und außer Wirkeingriff mit dem Förderer 7 bewegbaren Hebel 18 od.dg1. Druckglied gebildet und steht über eine Federeinrichtung 19 mit der querbeweglichen Seitenwand 15 des Förderers 7 in Verbindung. Hierzu ist der Hebel 18 um eine im wesentlichen parallel zur Förderebene des Förderers 7 verlaufende Achse 20 an der Seite des Maschinengestells 1 schwenkbar gelagert. Das untere Ende des Hebels 18 übergreift eine Nockenscheibe 21 (Fig. 1), die mit einem der angrenzenden Hebelseite zugewandten Nocken 22 entsprechend dem Fördertakt des Förderers 7 umläuft. Beim Auflaufen auf den Nocken 22 verschwenkt der Hebel 18 um seine Achse 20 zum Förderer 7 hin und drückt dabei mit seinem oberen Endbereich 24 gegen einen nach außen gewölbten Bereich 25 einer die Federeinrichtung

19 bildenden Federdruckleiste 26, die gemeinsam mit der in ihrem freien Endbereich querbeweglichen Seitenwand 15 des Förderers 7 durch die Befestigungsmittel 16 am Maschinengestell 1 befestigt ist und dabei wie die Seitenwand 15 zur Greifvorrichtung 8 hin frei auskragt. Mit ihrem freien, nach innen gebogenen Endbereich 27 liegt die Federdruckleiste 26 an dem freien Endbereich der Seitenwand 15 an.

Wird der Hebel 18 um die Achse 20 mit seinem oberen Bereich 24 nach innen geschwenkt, so wird der auf die Federdruckleiste 26 dabei ausgeübte Druck auf die Seitenwand 15 des Förderers übertragen, wodurch der Endbereich 27 der Federdruckleiste 26 bzw. der angrenzende freie Endbereich der Seitenwand 15 den entsprechenden Erdtopf 5, und zum Teil auch die unmittelbar nachfolgenden Erdtöpfe 5, gegen die gegenüberliegende feste Wand 14 des Förderers 7 drückt.

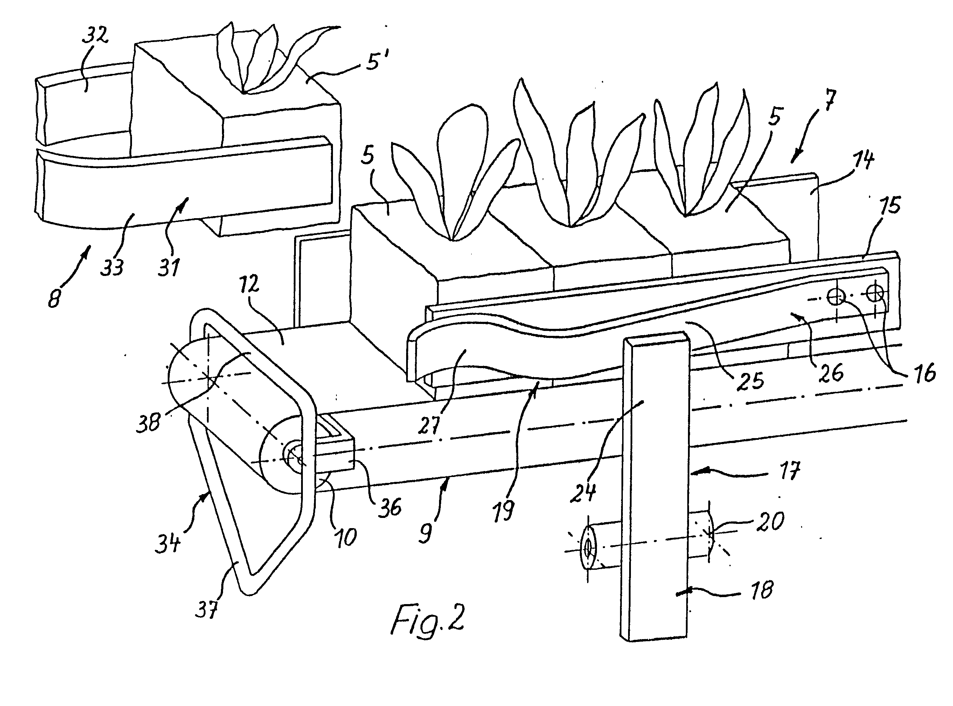

Dieser Betriebszustand ist in Fig. 2 gezeigt, wonach mittels der Greifvorrichtung 8 soeben der vorderste Erdtopf 5' vom Fördertrum 12 abgenommen und angehoben worden ist und während dieses Vorgangs der nächstfolgende Erdtopf 5 in der beschriebenen Weise fest zwischen den Seitenwänden 14 und 15 des Förderers 7 auf diesem eingespannt gehalten ist. Dies gewährleistet eine sichere Vereinzelung des in der Abnahme begriffenen Erdtopfes 5' unter Lösen etwaiger Verhakungen seines Blattwerks mit dem des nächstfolgenden Erdtopfes 5, ohne diesen dabei in seiner Position zu verändern oder in sonstiger Weise nachteilig zu beeinflussen.

Beim Ablaufen vom Nocken 22 der Nockenscheibe 21 wird die Druckbeaufschlagung der Federdruckleiste 26 durch den Hebel 18 aufgehoben und dessen oberer Bereich 24 liegt lediglich in einer losen Bereitstellung an dem nach außen gewölbten Bereich 25 der Federdruckleiste 26 an.

Die Greifvorrichtung 8 umfaßt einen Pflanzarm 28, der in Fahrtrichtung, die in Fig. 1 durch einen Pfeil 29 angedeutet ist, vor dem Förderer 7 angeordnet ist. Für eine Aufwärts- und Abwärtsbewegung des Pflanzarms 28, wie sie für eine Abnahme des jeweils vordersten Erdtopfes 5' und dessen Einsetzen in die vom Pflanzschar 2 gezogene Pflanzrinne vorgesehen ist, ist der Pflanzarm 28 an seinem vom Förderer 7 abgewandten Ende bei 30 schwenkbar am Maschinengestell 1 abgestützt und trägt an seinem anderen Ende ein Greiforgan, das von einem Saugkopf gebildet sein kann oder statt dessen entsprechend der zeichnerischen Darstellung aus einer auf- und zubewegbaren Greifgabel 31 besteht. Die Greifgabel 31 umfaßt dabei einen festen Gabelarm 32 und einen beweglich an den Pflanzarm 28 angelenkten Gabelarm 33, der in Richtung auf den Gabelarm 32 federbeaufschlagt ist. Die Federvorspannung ist hierbei so bemessen, daß normalerweise eine Schließstellung der Greifgabel 31 in der Weise vorliegt, daß ein gegebener Erdtopf 5 zwischen den Gabelarmen 32 und 33 mit Klemmdruck aufnehmbar bzw. gehalten ist.

Zum Öffnen der Greifgabel 31, wobei der Gabelarm 33 entgegen der Federkraft vom Gabelarm 32 nach außen bewegt wird, sind eine erste Spreizvorrichtung 34 und eine zweite Spreizvorrichtung 35 vorgesehen.

Die erste Spreizvorrichtung 34 ist am Abgabeende des Förderers 7 in Form eines an einer Halterung 36 der Umlenkrolle 10 befestigten Rundstab-Bügels mit sich nach unten verjüngendem Keilende 37 vorgesehen. Durch einen Spreizvorgang öffnet sie die Greifgabel 31 zur Aufnahme des jeweils vordersten Erdtopfes 5' bzw. zu dessen Abnahme vom Fördertrum 12, welches bei einem Förderschritt einen Erdtopf 5 jeweils bis unmittelbar an die Spreizvorrichtung 34 heranführt. Diese bildet dabei mit ihrem oberen waagerechten Bügelteil 38 einen Anschlag für den jeweils vordersten Erdtopf 5'.

Die zweite Spreizvorrichtung 35 ist im unteren Endbereich der Bewegungsbahn des Pflanzarms 28 an einem Teil des Pflanzschars 2 bzw. einer Halterung für dieses befestigt und kann bei der aus Fig. 1 ersichtlichen schrägen Ausrichtung die gleiche Ausbildung aufweisen, wie sie in Fig.2 für die erste Spreizvorrichtung 34 gezeigt ist, wobei jedoch die Anordnung um 180° gedreht mit nach oben weisender Keilspitze 37 erfolgt.

Die Spreizvorrichtungen 34 und 35 können im übrigen auch statt von einem Bügel von einem sich verjüngenden Bolzen od. dgl. Druckglied gebildet sein, das geeignet ist, mit seinem sich erweiternden Teil den Gabelarm 33 zum Öffnen der Greifgabel 31 vom Gabelarm 32 abzuspreizen. Durch den Federdruck kehrt der Gabelarm 33 nach Überlaufen der jeweiligen Spreizvorrichtung 34 oder 35 selbsttätig in seine Schließstellung zurück.

Der Pflanzarm 28 führt bei seinem Arbeitsspiel eine Auf und Abwärtsbewegung wie eine Schwinge nach Art eines Kurbelgetriebes aus, indem er über einen Lenker bzw. ein Koppelglied 39 mit einer umlaufenden Kurbel 40 gelenkig verbunden ist, die eine umlaufende Antriebsscheibe 41 in der bei 42 teilweise angedeuteten Antriebsverbindung der Pflanzmaschine umfaßt, an der sie exzentrisch befestigt ist. Über die Antriebsverbindung 42, z.B. einen Riemen od. dgl. Transmissionsglied, erfolgt auch der Antrieb der Nockenscheibe 21. Die Verbindung des Koppelgliedes 39 mit der Kurbel 4o erfolgt über ein Langloch 43 im Koppelglied für eine Leerbewegung der Kurbel 40 bei ihrer Aufwärtsbewegung, derart, daß der vorderste Erdtopf 5' in einer kurzen Stillstandsphase auf der Bewegungsbahn des Pflanzarms 28 von der Greifgabel 31 aufgenommen werden kann.

Im übrigen ist der Pflanzarm 28 mit einem Kulissenstein 44 versehen, mit dem er in einer in einer vertikalen Ebene umlaufenden Gleitbahn 45 geführt ist. Die Gleitbahn 45 ist in einem senkrechten Ständer 46 des Maschinengestells 1 gebildet. Zur Ausführung der mit Hilfe der Gleitbahn 45 der auf- und abwärtsgerichteten Schwenkbewegung überlagerten Hin- und Herbewegung in Längsrichtung des Pflanzarms 28 ist dieseran seinem von der Greifgabel 31 abgewandten Ende zusätzlich zu seiner Schwenkbeweglichkeit längsbeweglich am Maschinengestell abgestützt, indem er mit diesem Ende in einer Hülse 47 in Längsrichtung hin- und hergehbar abgestützt ist, während seine Schwenkbeweglichkeit über die Hülse 47 bei 30 vorgenommen ist. Auf seinem Arbeitsspiel erfährt der Pflanzarm 28 somit teleskop-artige Längenveränderungen.

Mittels der beschriebenen Anordnung und Ausgestaltung erfährt der Pflanzarm 28 eine sich periodisch ändernde Auf- und Abwärtsbewegung unter jeweils kurzzeitigem Öffnen seiner Greifgabel 31 an der ersten Spreizvorrichtung 34 zur Aufnahme des jeweils vordersten Erdtopfes 5' und an der zweiten Spreizvorrichtung 35 zum Freigeben und Einsetzen des Erdtopfes 5' in die gezogene pflanzrinne in einer raschen Bewegungsfolge. Der jeweilige vorderste Erdtopf 5' wird dabei mit hoher Arbeitsgeschwindigkeit bei gleichzeitigem Festhalten des nächstfolgenden Erdtopfes 5 in der beschriebenen Weise von dem an die Spreizvorrichtung 34 angrenzenden vorderen Endbereich des Fördertrums 12 abgenommen, über eine kurze Bogenstrecke in Fahrtrichtung 29 aus dem Bereich des Förderers 7 herausbewegt und dann nach unten zur Spreizvorrichtung 35 zu seiner Abgabe bewegt, woraufhin eine neue Aufwärtsbewegung schräg nach oben zur Spreizvorrichtung 34 zur Durchführung eines neuen Arbeitsspiels beginnt. Bevor die Greifgabel 31 die Spreizvorrichtung 34 erreicht, ist durch einen zwischenzeitlichen Förderschritt des Förderers 7 wieder ein Erdtopf 5 gegen den Anschlag 38 in Abnahmeposition gefördert worden. Währenddessen kann der Förderer 7 zwanglos und unabhängig vom Arbeitstakt der Maschine von seinem dem Anschlag 38 abgewandten Ende her mit Pflanztöpfen 5, etwa von einer zusätzlich an der Maschine vorgesehenen Lagerstation aus, durch eine Bedienungsperson beschickt werden.

Bei kurzen Pflanzabständen und hohen Arbeitsgeschwindigkeiten kann es sich empfehlen, die zweite Spreizvorrichtung 35 in der Weise gelenkig am Maschinengestell 1 zu befestigen, daß nach dem Auflaufen der Greifgabel 31 auf die Spreizvorrichtung 35 diese beim Rückhub des Pflanzarms 28 nach oben eine Wegstrecke aufwärts mitgenommen wird, die von einem Anschlag im Weg der Spreizvorrichtung 35 bzw. deren Verbindungsmittel begrenzt ist. Erst bei Erreichen dieses Anschlages schließt die Greifgabel 31 wieder durch Ablaufen von der Spreizvorrichtung 35. Hierdurch ist ein Sicherheitsabstand zwischen dem Öffnen der Greifgabel 31 zum Absetzen des Erdtopfes in die Pflanzrinne und dem erneuten Schließen der Greifgabel 31 nach erfolgtem Absetzen des Erdtopfes erreicht. Die Spreizvorrichtung 35 kehrt nach Erreichen des Anschlags selbsttätig in ihre untere Ausgangsstellung zurück.

**Patentansprüche:**

Pflanzmaschine zum maschinellen Einsetzen von in Erdtöpfen (5) herangezogenen Jungpflanzen in das Erdreich, mit einem von einem Maschinengestell (1) abgestützten, umlaufenden Förderer (7) für eine schrittweise Zufuhr der Erdtöpfe (5) in einer Längsreihe zu einer Wegnahmevorrichtung (8), mittels welcher der in Förderrichtung jeweils vorderste Erdtopf (5') vom Förderer (7) in den Stillstandsphasen der Erdtopfreihe wegnehmbar und in das Erdreich einbringbar ist, wobei der Förderer (7) mit einem Festhalter (17) versehen ist, der in den Stillstandsphasen der Erdtopfreihe und während der Wegnahme des jeweils vordersten Erdtopfes (5') mittels der Wegnahmevorrichtung (8) den jeweils nächstfolgenden Erdtopf (5) auf dem Förderer (7) festlegt, diesen jedoch während der Vorschubphasen für eine Vorbewegung in die Wegnahmestellung freigibt, dadurch gekennzeichnet, daß der Förderer (7) intermittierend antreibbar und die Wegnahmevorrichtung (8) von einem in Fahrtrichtung (29) vor dem Förderer (7) angeordneten, in einer vertikalen Ebene aufwärts und abwärts bewegbaren Pflanzarm (28) gebildet ist, der an seinem vom Förderer (7) abgewandten Ende schwenkbar am Maschinengestell (1) abgestützt ist und an seinem dem Förderer (7) zugewandten Ende ein Greiforgan (31) trägt, daß der Pflanzarm (28) eine eine Auf- und Abwärtsbewegung ausführende, mittels eines Kulissensteins (44) in seiner vertikalen Bewegungsebene geführte Schwinge nach Art eines Kurbelgetriebes bildet, wobei sein vom Greiforgan (31) abgewandtes Ende zusätzlich zu seiner Schwenkbeweglichkeit längsbeweglich am Maschinengestell (1) abgestützt ist, und daß zum Öffnen des Greiforgans (31) eine erste Spreizvorrichtung (34) am Abgabeende des Förderers (7) zu Aufnahme des jeweils vordersten Erdtopfes (5') und eine zweite Spreizvorrichtung (35) im unteren Endbereich der Bewegungsbahn des Pflanzarms (28) zur Freigabe des Erdtopfes (5') und zu dessen Einsetzen in eine in das Erdreich gezogene Pflanzrinne vorgesehen sind.

2. Pflanzmaschine nach Anspruch 1, dadurch gekennzeichnet, daß die erste Spreizvorrichtung (34) zugleich einen Anschlag (38) für den jeweils vordersten Erdtopf (5') auf dem Förderer (7) bildet.

3. Pflanzmaschine nach Anspruch 1 oder 2, dadurch gekennzeichnet, daß die zweite Spreizvorrichtung (35) für eine begrenzte aufwärts gerichtete Mitnahme mit dem Greiforgan (31) schwenkbar am Maschinengestell (1) abgestützt ist.

**Revendications**

1.- Planteuse-repiqueuse destinée à planter des plants cultivés en mottes (5), à la machine, dans le sol, comportant un transporteur sans fin (7) monté sur un châssis de machine (1) et destiné à amener les plants en mottes (5) pas à pas en une file longitudinale à un dispositif d'enlèvement (8) au moyen duquel le plant en motte (5') antérieur extrême dans le sens du transport peut chaque fois être enlevé du transporteur (7) pendant les phases d'immobilisation de la file de plants et peut être planté dans le sol, étant entendu que le transporteur (7) est pourvu d'un dispositif de retenue (17) qui, pendant les phases d'immobilisation de la file de plants en mottes et pendant l'enlèvement du plant antérieur extrême (5') au moyen du dispositif d'enlèvement (8), retient le plant en motte (5) suivant sur le transporteur (7), mais le libère pendant les phases d'avancement en vue d'une progression vers la position d'enlèvement, caractérisée en ce que le transporteur (7) peut être entraîné par intermittence et le dispositif d'enlèvement (8) est formé par un bras de plantage (28) mobile vers le haut et vers le bas dans un plan vertical et monté devant le transporteur (7) dans le sens du déplacement (29), ce bras de plantage étant monté à pivot sur le châssis (1) de la machine, au niveau de son extrémité opposée au transporteur (7), et portant un organe de préhension (31) sur son extrémité dirigée vers le transporteur (7), le bras de plantage (28) forme une bielle oscillante guidée dans son plan de déplacement vertical, comme dans un mécanisme à manivelle, au moyen d'un doigt de coulissement (44) et effectuant un mouvement vers le haut et vers le bas, son extrémité opposée à l'organe de préhension (31) étant montée sur le châssis (1) de la machine de manière, outre ses possibilités de pivotement, à pouvoir se déplacer dans le sens longitudinal, et, pour ouvrir l'organe de préhension (31), un premier dispositif d'écartement (34) est prévu à l'extrémité de décharge du transporteur (7) pour recevoir le plant en motte antérieur extrême (5') et un second dispositif d'écartement (35) est prévu dans la zone d'extrémité inférieure du trajet du bras de plantage (28) pour libérer le plant en motte (5') et pour le planter dans une rigole taillée dans le sol.

2.- Planteuse-repiqueuse suivant la revendication 1, caractérisée en ce que le premier dispositif d'écartement (34) forme en même temps une butée (38) pour le plant en motte antérieur extrême (5') sur le transporteur (7).

3.- Planteuse-repiqueuse suivant la revendication 1 ou 2, caractérisée en ce que le second dispositif d'écartement (35) est monté à pivot sur le châssis (1) de la machine en vue d'être entraîné vers le haut sur une distance limitée avec l'organe de préhension (31).

**Claims:**

1. A planting machine for the mechanical setting out of young plants grown in earth pots (5) in the soil, having a circulating conveyor (7) supported by a machine frame (1) for the gradual feed of the earth pots (5) in a longitudinal row to a removal device (6) by means of which the particular earth pot (5') which is foremost in the conveying direction can be removed from the conveyor (7) in the phases when the row of earth pots is stationary and be put in the soil, the conveyor (7) being provided with a restraining means (17) which, in the phases when the row of earth pots is at a standstill and during the removal of the particular earth pot (5') which is foremost by means of the removal device (6), arrests the following earth pot (5) on the conveyor (7) but releases this during the feed phase for a forward movement into the removal position, characterised in that the conveyor (7) can be driven intermittently and the removal device (8) is formed by a planting arm (28) which is disposed in front of the conveyor (7) in the direction of travel (29) and movable is pivotally supported on the machine frame (1) at its end remote from the conveyor (7) and carries a gripping member (31) at its end adjacent to the conveyor (7), in that the planting arm (26) forms a rocking arm which executes an upward and downward movement and is guided by means of a sliding block (44) in its vertical plane of movement in the manner of a crank drive, its end remote from the gripping member (31) being supported on the machine frame (1) for longitudinal movement in addition to its pivotal mobility, and in that in order to open the gripping member (31), a first expanding device (34) is provided at the discharge end of the conveyor (7) for the reception of the foremost earth pot (5') in each case and a second expanding device (35) is provided in the lower end region of the path of movement of the planting arm (26) for the release of the earth pot (5') and for its setting in a planting channel drawn in the soil.

2. A planting machine as claimed in claim 1, characterized in that the first expanding device (34) also forms a stop (38) for the particular earth pot (5') which is foremost on the conveyor (7).

3. A planting machine as claimed in claim 1 or 2, characterized in that the second expanding device (35) is pivotally supported on the machine frame (1) for limited upwardly directed entrainment with the gripping member (31).

Fig.1

0 062 917

Fig.2

0 062 917